# FASCICULE DE BREVET EUROPEEN

(11) **EP 1 298 785 B1**
(45) Date de publication et mention de la délivrance du brevet: **07.03.2018**
(21) Numéro de dépôt: 02292267.8
(22) Date de dépôt: 17.09.2002
(51) Int. Cl.: H02P 6/16, B62D 5/04, B62D 15/02

(54) **Dispositif de commande d'un moteur à commutation électronique**
Regelvorrichtung für einen elektronisch geschalteten Motor
Control device for an electronic commutated motor

(30) Priorité: 26.09.2001 FR 0112381
(43) Date de publication de la demande: 02.04.2003
(73) Titulaire: S.N.R. ROULEMENTS, F-74010 Annecy Cedex (FR)
(72) Inventeur: Desbiolles, Pascal, 74570 Thorens-Glières (FR); Nicot, Christophe, 74600 Quintal (FR); Friz, Achim, 74600 Seynod (FR)
(74) Mandataire: Sayettat, Julien Christian

(56) Documents cités:
- EP-A- 0 374 805
- EP-A- 0 871 014
- EP-A1- 1 298 786
- WO-A1-01/20351
- FR-A- 2 700 588
- FR-A- 2 749 452
- FR-A- 2 754 063
- FR-A- 2 769 088
- FR-A- 2 792 403
- FR-A- 2 794 504
- US-A- 5 774 068

## Description

L'invention concerne un dispositif de commande d'un moteur à commutation électronique comprenant P phases et N paires de pôles, un procédé d'utilisation d'un tel dispositif ainsi qu'un roulement intégrant le codeur et le capteur d'un tel dispositif.

Du fait de leur puissance massique importante, les moteurs à commutation électronique, ou moteur brushless, peuvent être utilisés pour commander la rotation d'un organe mécanique dans un grand nombre d'applications.

Un exemple particulier d'une telle application est l'assistance à la direction des véhicules automobiles par un système de direction assistée de type électrique.

Dans le cadre de son application, il est nécessaire de commander précisément la commutation du courant dans les phases de ces moteurs afin d'obtenir un couple qui soit optimal et égal à une consigne avec le moins de modulations possibles.

Pour ce faire, il est connu d'utiliser un capteur comprenant trois éléments sensibles disposés en regard d'un codeur comportant N paires de pôles, ledit codeur étant mis en rotation par le moteur.

Dans le cas d'un moteur triphasé, en prévoyant que les trois éléments sensibles soient déphasés l'un par rapport à l'autre d'un angle mécanique permettant de fournir trois signaux électriques déphasés de 120° électriques, il est possible de commander la commutation entre les phases du moteur au moment opportun.

Mais ce type de réalisation peut provoquer des modulations du couple du moteur qui sont notamment dues :
- au couple de réluctance du moteur ;
- aux défauts de commutation du courant d'une phase à l'autre en fonction de la vitesse de rotation du moteur ;
- à l'absence de chevauchement des FEM trapézoïdales.

On connaît, notamment du document FR- 2 749 452, un dispositif de commande d'un moteur électrique à commutation électronique qui permet de s'affranchir partiellement des défauts de couple liés à la commutation du courant d'une phase à l'autre.

Mais pour s'affranchir de la modulation de couple liée à la conception du moteur (couple de réluctance et absence de chavauchement des FEM trapézopidales), il devient alors nécessaire de connaître finement la position absolue du rotor pour contrôler le courant dans les phases en fonction de la position du rotor.

Une telle stratégie de commande nécessite donc un capteur supplémentaire donnant une position haute résolution en plus de celui pilotant la commutation.

Ce type de solution, en prévoyant deux capteurs, conduit à des contraintes d'intégration importantes et à un coût non optimisé. En outre, elle peut être pénalisante en terme d'inertie mécanique du rotor.

Le document US 5 774 068 A divulgue un codeur utilisé dans un moteur à commutation électronique. Le codeur utilise un signal de position à n bits formé sur une piste d'une plaque de codage et un signal incrémentiel lié audit signal à n-bits et formé sur une autre piste de ladite plaque de codage. Le codeur est muni de moyens de lecture du signal de position et du signal incrémentiel.

Le document EP 0 374 805 A divulgue un moteur synchrone à commutation électronique comprenant un aimant permanent monté de manière coulissante ou rotative et un stator formé d'un enroulement. Le moteur est muni en outre d'un détecteur générant un signal de position qui indique la position relative ou angulaire de l'aimant permanent, et d'un dispositif de déclenchement qui, en fonction du signal de position, applique à l'enroulement un courant sinusoïdal ou un courant multi-niveaux.

Le document WO 01/20351 A1 divulgue un dispositif de commande d'un moteur à commutation électronique pourvu de P phases et N paires de pôles. Le dispositif comprend un capteur fixe disposé en regard et à distance d'entrefer d'un codeur cylindrique. Le codeur comprend une piste principale et trois pistes de commutation. Le capteur fixe comporte plusieurs éléments sensibles dont au moins deux sont positionnés en regard de la piste principale de sorte à délivrer deux signaux électriques périodiques en quadrature et au moins un est positionné en regard de la piste de commutation de sorte à délivrer un signal électrique. Le capteur comprend un circuit électronique qui est apte à délivrer d'une part des signaux de commutation du courant dans les phases et d'autre part des signaux de position haute résolution permettant le pilotage de la tension alimentant les phases afin de diminuer les sauts de couple.

Toutefois, un tel dispositif de commande présente un encombrement important, du fait de l'encombrement du codeur cylindrique et de la taille du capteur, et du fait que ses éléments sensibles magnétiques sont séparés spatialement, en face de chaque piste. En outre, du fait que les pistes principale et de commutation sont munies de dents et de fentes pour la modulation d'un champ magnétique généré par un aimant permanent solidarisé au capteur fixe, formant ainsi une roue phonique, et du fait de la pluralité d'éléments sensibles utilisés, chacun ayant des caractéristiques légèrement différentes, la commutation du courant dans les phases souffre d'un déficit de précision et génère des modulations de couple du moteur.

L'invention vise notamment à résoudre ces inconvénients en proposant une solution plus intégrée tant du côté du codeur que du capteur.

A cet effet, et selon un premier aspect, l'invention propose un dispositif de commande d'un moteur à commutation électronique pourvu de P phases et N paires de pôles, comprenant un capteur fixe disposé en regard et à distance d'entrefer d'un codeur, ledit codeur étant destiné à effectuer une pluralité de tours autour de son axe de rotation, ledit codeur comprenant une piste principale et une piste de commutation, ledit capteur fixe comportant au moins trois éléments sensibles dont au moins deux sont positionnés en regard de la piste principale de sorte à délivrer deux signaux électriques S1, S2 périodiques en quadrature et au moins un est positionné en regard de la piste de commutation de sorte à délivrer un signal électrique S3, le capteur comprenant un circuit électronique apte, à partir des signaux S1, S2 et S3, à délivrer :
- des signaux digitaux A, B carrés en quadrature, à partir desquels et en fonction d'une première consigne de courant (I*) définit une deuxième consigne de courant (Iref) qui pilote le courant (Im) alimentant les enroulements de phase du moteur (1) ;
- un signal C sous forme de 2* P* N impulsions (TP1-TP6) par tour du codeur, à partir duquel des signaux de commutation sont fournis de sorte à commander des interrupteurs (T1-T6) caractérisé en ce que le codeur est un codeur circulaire, les pistes principales et de commutation étant concentriques sur le codeur, le codeur étant formé d'un anneau magnétique multipolaire sur lequel est aimantée une pluralité de paires de pôles Nord et Sud équirépartis avec une largeur angulaire constante de sorte à former les pistes principale et de commutation, la piste de commutation comprenant 2* P* N singularités magnétiques équiréparties angulairement, chaque singularité magnétique étant formée de deux paires de pôles qui sont différentes des autres.

Selon un deuxième aspect, l'invention propose un procédé d'utilisation d'un tel dispositif de commande dans lequel les signaux de commande permettent, en fonction d'une logique de commutation prédéterminée, d'actionner les interrupteurs deux à deux alternativement, le passage de l'actionnement de deux interrupteurs aux deux suivants s'effectuant à chaque détection d'une impulsion électrique du signal C.

Selon un troisième aspect, l'invention propose un roulement destiné à permettre la rotation du rotor d'un moteur à commutation électronique comprenant P phases et N paires de pôles ou celle d'un organe mis en rotation par ledit rotor, ledit roulement comprenant une bague fixe, une bague tournante et des corps roulants disposés entre lesdites bagues, dans lequel :
- est associé à la bague tournante un codeur circulaire; et
- est associé à la bague fixe un capteur fixe disposé en regard et à distance d'entrefer du codeur,
caractérisé en ce que le codeur circulaire et le capteur sont respectivement le codeur circulaire et le capteur d'un dispositif de commande selon l'une quelconque des revendications 1 à 10. D'autres objets et avantages de l'invention apparaîtront au cours de la description qui suit, faite en référence aux dessins annexés, dans lesquels :
- la figure 1 est une représentation synoptique d'un dispositif de commande d'un moteur à commutation électronique comprenant 3 phases et une paire de pôles ;
- la figure 2 est une vue schématique de face d'un codeur utilisable dans le dispositif de commande de la figure 1 ;
- la figure 3 représente les signaux A, B et C délivrés par le capteur lors de la rotation du codeur représenté sur la figure 2 ;
- les figure 4a et 4b représentent un signal C, une logique de commutation commandée par ce signal, le séquencement des interrupteurs ainsi que le courant dans les phases correspondantes, respectivement pour une rotation dans le sens anti horaire et horaire du rotor ;
- la figure 5a représente sous forme vectorielle les positions relatives du champ statorique, du champ rotorique et des impulsions pour la logique de commutation des figures 4a et 4b ;
- les figures 5b et 5c, analogues à la figure 5a, représentent les étapes de la procédure d'initialisation de la position du rotor ;
- la figure 6 est une vue en coupe longitudinale d'un roulement suivant l'invention.

L'invention concerne un dispositif de commande d'un moteur à commutation électronique 1 ou moteur brushless comprenant P phases.

Ce type de moteur comprend typiquement un rotor 2 portant N paires de pôles magnétiques Nord/Sud et un stator 3 portant P bobines B1-B3 formées respectivement d'un enroulement de phase, le rotor 2 étant mis en rotation de façon connue en commandant l'alimentation électrique dans les P enroulements de phases.

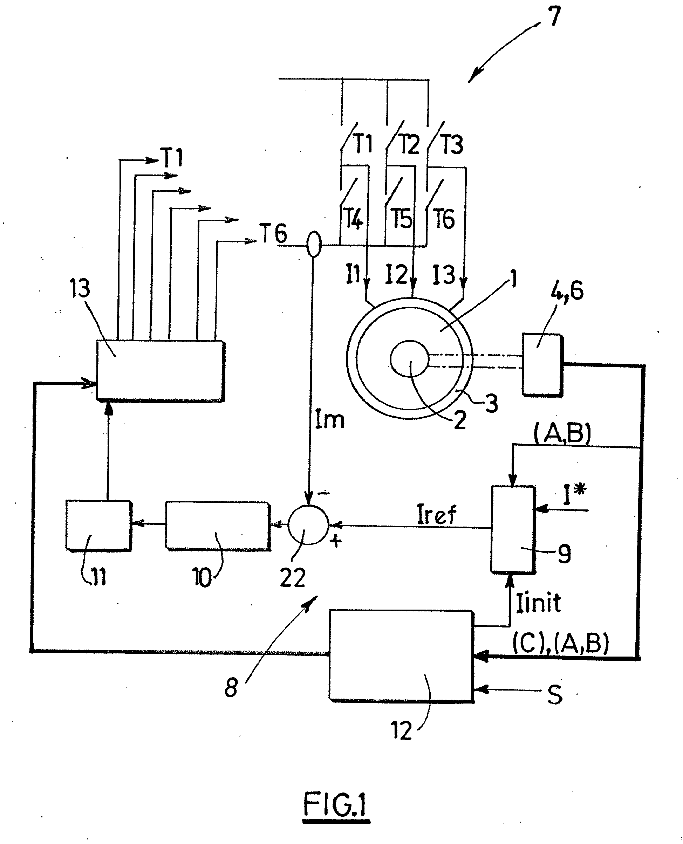

Sur la figure 1 est représenté un schéma synoptique d'un dispositif de commande d'un tel moteur 1 à trois phases et une paire de pôles.

Le dispositif comprend un codeur multipolaire circulaire 4 destiné à effectuer, conjointement au rotor 2, une pluralité de tours autour de son axe de rotation.

Le codeur 4 comprend une piste principale 4a et une piste de commutation 4b comprenant 2*P*N singularités 4b1-4b6 équiréparties angulairement, les pistes principale 4a et de commutation 4b étant disposées concentriquement sur le codeur 4.

Le codeur 4 est formé d'un anneau magnétique multipolaire sur lequel est aimantée une pluralité de paires de pôles Nord et Sud 5 équiréparties avec une largeur angulaire constante de sorte à former les pistes principale 4a et de commutation 4b, une singularité magnétique 4b1-4b6 de la piste de commutation 4b étant formée de deux paires de pôles qui sont différentes des autres.

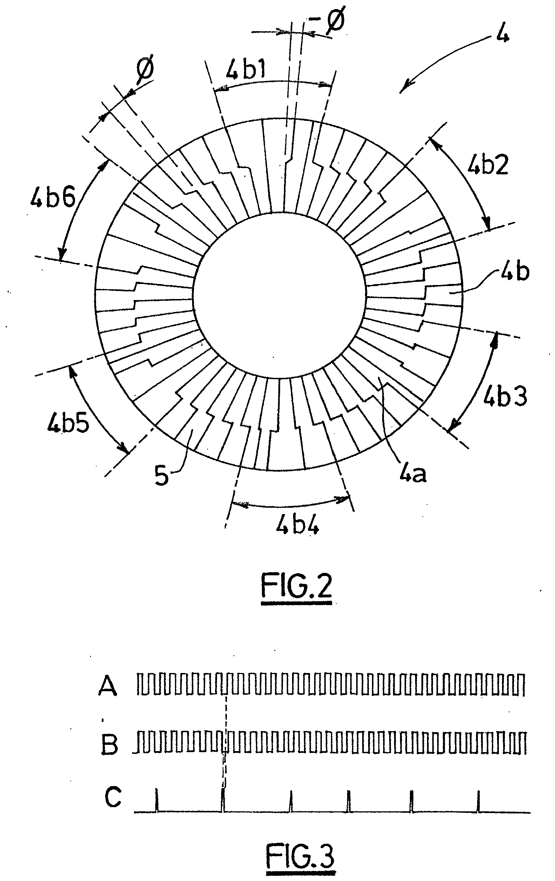

Dans le mode de réalisation particulier représenté sur la figure 2, les pistes principale 4a, disposée vers l'intérieur de l'anneau, et de commutation 4b, disposée vers l'extérieur de l'anneau, comprennent 24 paires de pôles. Les paires de pôles 5 de la piste de commutation 4b sont en avance de phase d'une valeur φ, par exemple égale à un huitième de période, par rapport à celles de la piste principale 4a.

Dans ce cas où P=3 et N=1, la piste de commutation 4b comprend 6 singularités magnétiques 4b1-4b6 espacées de deux paires de pôles les unes des autres. Chaque singularité est formée de deux paires de pôles 5, la largeur des pôles étant agencée pour qu'ils soient respectivement déphasés de φ, 0, -φ et 0 par rapport aux pôles correspondants de la piste principale 4a. Ainsi, comme on le verra par la suite, chaque impulsion du signal C correspond à la détection d'une inversion de déphasage entre la piste principale 4a et la piste de commutation 4b.

Le dispositif de commande comprend en outre un capteur 6 fixe disposé en regard et à distance d'entrefer du codeur 4.

Le capteur 6 comprend au moins trois éléments sensibles dont au moins deux sont positionnés en regard de la piste principale 4a et au moins un est positionné en regard de la piste de commutation 4b.

Dans un exemple particulier, les éléments sensibles sont choisis parmi le groupe comprenant les sondes à effet Hall, les magnétorésistances, les magnétorésistances géantes.

Le capteur 6 utilisé est apte à délivrer deux signaux électriques S1, S2 périodiques en quadrature par l'intermédiaire des éléments sensibles disposés en regard de la piste principale 4a et un signal électrique S3 par l'intermédiaire des éléments sensibles disposés en regard de la piste de commutation 4b.

Le principe d'obtention des signaux S1 et S2 à partir d'une pluralité d'éléments sensibles alignés est par exemple décrit dans le document FR-2 792 403 issu de la demanderesse.

Mais des capteurs 6 comprenant deux éléments sensibles qui sont aptes à délivrer les signaux S1 et S2 sont également connus.

Le capteur 6 comprend en outre un circuit électronique qui, à partir des signaux S1, S2 et S3, délivre des signaux digitaux A, B carrés en quadrature et C sous forme de 6 (P=3 et N=1) impulsions électriques TP1-TP6 par tour du codeur 4 (voir figure 3).

Un principe d'obtention des signaux digitaux A, B et C, ainsi que différents modes de réalisation des singularités magnétiques 4b1-4b6, sont décrits dans les documents FR-2 769 088 et EP-0 871 014.

Par un traitement électronique adapté des signaux A, B et C, il est possible d'obtenir finement la vitesse de rotation, la position angulaire et/ou le sens de rotation du codeur 4 par rapport au capteur 6.

Suivant une réalisation, le capteur 6 comprend en outre un interpolateur, par exemple du type décrit dans le document FR-2 754 063 issu de la demanderesse, permettant d'augmenter la résolution des signaux de sortie.

Le capteur 6 peut être intégré sur un substrat en silicium ou équivalent par exemple AsGa, de sorte à former un circuit intégré et personnalisé pour application spécifique, circuit parfois désigné sous le terme ASIC pour faire référence au circuit intégré conçu partiellement ou complètement en fonction des besoins.

Bien que la description soit faite en relation avec un ensemble codeur/capteur magnétique, il est également possible d'utiliser dans un mode de réalisation, qui ne fait pas partie de l'invention, une technologie de type optique. Par exemple, le codeur 4 peut être formé d'une cible en métal ou en verre sur laquelle les pistes de référence et de commutation ont été gravées de sorte à former un motif optique analogue au motif magnétique multipolaire exposé ci-dessus, les éléments sensibles étant alors formés de détecteurs optiques.

Le dispositif de commande comprend en outre un circuit de commutation 7 des courants dans les enroulements de phase du moteur 1. Dans un exemple particulier, le circuit de commutation 7 comprend 2*P*N interrupteurs T1-T6, par exemple formés chacun d'un transistor à effet de champ de type MOSFET fonctionnant à 20 kHz, qui sont disposés en pont de sorte à alimenter les enroulements de phases de façon appropriée.

Les 2*P*N interrupteurs T1-T6 peuvent être actionnés deux à deux suivant 2*P*N états possibles, le passage d'un état à un autre étant commandé par la détection d'une des 2*P*N impulsions TP1-TP6 du signal C.

Dans le mode de réalisation représenté sur la figure 1, le dispositif de commutation 7 comprend 6 interrupteurs T1-T6 qui permettent d'alimenter les trois enroulements de phase avec respectivement un courant I1, I2 et I3, I1 + I2 + I3 étant égal à 0.

La commande du dispositif de commutation 7, c'est à dire l'actionnement sélectif des interrupteurs T1-T6, est effectuée par un circuit de commande 8 qui :
- à partir du signal C fournit des signaux de commutation de la pluralité d'interrupteurs T1-T6 ; et
- à partir des signaux A, B et en fonction d'une première consigne de courant I* définit une deuxième consigne de courant Iref qui pilote le courant Im alimentant les enroulements de phase du moteur 1.

La consigne de courant I* peut être issue par exemple d'une boucle d'asservissement en vitesse du rotor 2, d'une boucle d'asservissement en position du rotor 2 ou d'une mesure du couple devant être appliqué par le rotor 2 sur l'organe mécanique.

La consigne I* est alimentée dans un circuit électronique 9 qui, à partir de cette consigne, introduit une modulation de la consigne Iref en fonction de la position du rotor issue des signaux A et B, cette modulation étant d'amplitude fonction de I* et en opposition de phase par rapport à la modulation de couple intrinsèque au moteur 1, afin d'obtenir un couple utile du moteur 1 exempt de modulation.

Dans le mode de réalisation représenté, le circuit de commande 8 comprend une boucle de régulation comprenant un régulateur 10, par exemple de type PID (proportionnel intégral dérivé), une commande à largeur variable (PWM) 11 fournissant un signal carré à 20 kHz dont le rapport cyclique est commandé par le régulateur 10 et un comparateur 22 comparant Im à Iref issu du circuit électronique 9.

De façon connue, la boucle de régulation permet, à partir de Iref, de moduler le courant dans les enroulements de phase en fonction de la position du rotor 2 de sorte à obtenir un couple du moteur constamment égale à la consigne I*.

Le circuit de commande 8 peut être réalisé sous la forme d'un seul microprocesseur 12 intégrant au moins une logique de commutation du circuit de commutation 7 qui détermine la succession des ouvertures/fermetures des différents interrupteurs T1-T6.

En variante, la boucle de régulation peut être réalisée sous forme analogique.

Selon une réalisation, le circuit de commande 8, en comparant le courant Im alimentant le moteur à la consigne de courant Iref, permet de moduler en largeur et en durée les signaux de commutation par l'intermédiaire d'une fonction logique ET 13.

Ainsi, à chaque détection d'une des 2*P*N impulsions TP1-TP6 du signal C, les signaux de commutation modulés en largeur et en durée commandent sélectivement la fermeture de deux interrupteurs choisis dans la logique de commutation de sorte à alimenter les deux enroulements de phase correspondants avec le courant régulé Im.

Les instants de commutation de phases peuvent être prévus lors de la détection du front montant ou descendant de l'impulsion TP1-TP6. En variante, et pour améliorer la précision de la commutation, on peut prévoir que le front montant soit utilisé dans un sens de rotation et le front descendant dans l'autre sens.

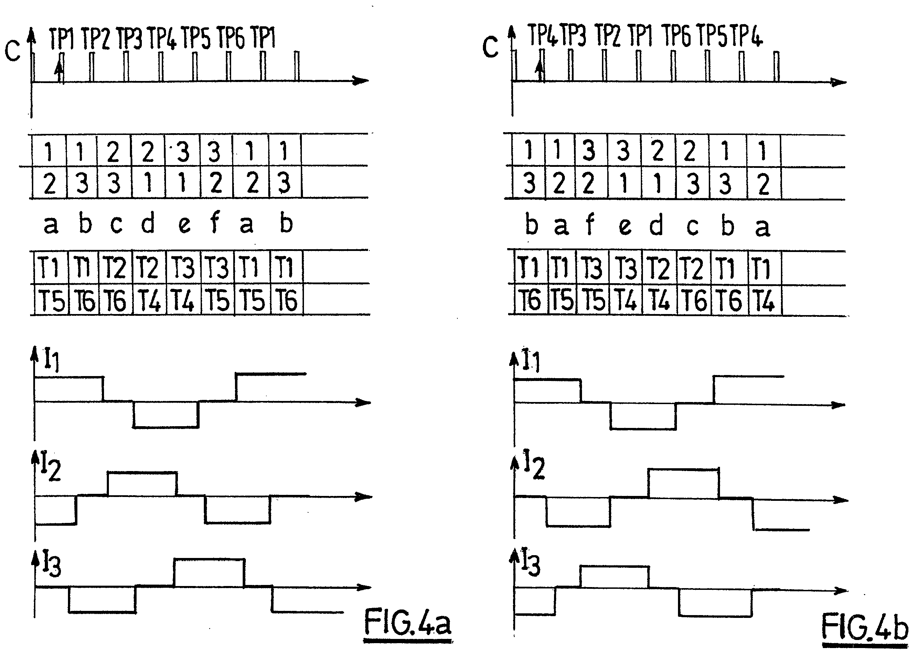

Les figures 4a et 4b représentent, dans le cadre de la réalisation représentée sur la figure 1, une logique de commutation des bobines, le séquencement des interrupteurs T1-T6 ainsi que le courant I1-I3 dans les phases correspondantes, respectivement pour une rotation du rotor 2 anti horaire et horaire.

Suivant cette réalisation, à chaque détection d'une impulsion TP1-TP6 du signal C les interrupteurs T1 et T5 (I1=-I2, I3=0), T1 et T6 (I1=-I3, I2=0), T2 et T6 (I2=-13, I1=0), T2 et T4 (I2=-I1, 13=0), T3 et T4 (I3=-I1, I2=0), T3 et T5 (I3=-I2, I1=0), T1 et T5 (I1=-I2, I3=0), etc...sont alternativement actionnés pour une rotation anti horaire.

Dans le cas d'une rotation horaire les interrupteurs, T1 et T6 (I1=-I3, I2=0), T1 et T5 (I1=-)2, I3=0), T3 et T5 (I3=-I2, 11=0), T3 et T4 (I3=-I1, I2=0), T2 et T4 (I2=-I1, I3=0), T2 et T6 (I2=-I3, 11=0), T1 et T6 (I1=-I3, I2=0), etc...sont alternativement actionnés.

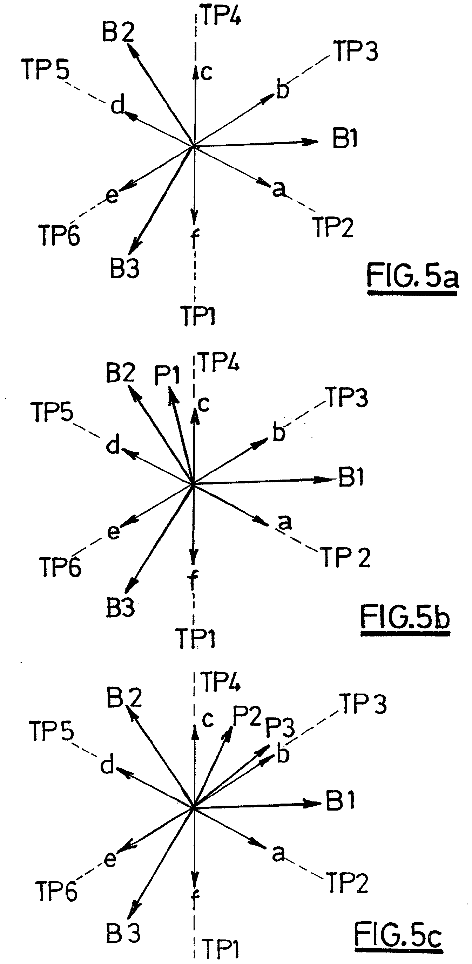

Il en résulte les six positions (a)-(f) du champ statorique représentées sur les figures 5a à 5c et indiquées sur les figures 4a, 4b. Ces positions sont parcourues suivant l'ordre a, b, c, d, e, f, a etc... pour une rotation anti horaire avec passage de l'une à l'autre de ces positons par détection respectivement des impulsions TP1, TP2, TP3, TP4, TP5, TP6, TP1, etc...

Dans le cas d'une rotation horaire, les positions du champ statorique sont parcourues suivant l'ordre b, a, f, e, d, c, b, etc... avec passage de l'une à l'autre de ces positions par détection respectivement des impulsions TP4, TP3, TP2, TP1, TP6, TP5, TP4, etc...

Le fonctionnement du dispositif de commande de la figure 1 est alors le suivant :
- le moteur 1 est alimenté par un courant Im régulé par la boucle de régulation de sorte à permettre la mise en rotation du rotor 2 et donc celle du codeur 4 associé ;
- le capteur 6 délivre les signaux A, B représentatifs notamment de la position du rotor 2 et le signal C sous forme de 6 impulsions TP1-TP6 par tour ;
- à chaque détection d'une impulsion TP1-TP6, le microprocesseur 12 ferme sélectivement deux interrupteurs T1-T6 en fonction de la logique de commutation sélectionnée ;
- les signaux A, B, représentatifs notamment de la position du rotor 2, permettent, en fonction de la première consigne de courant I* et par l'intermédiaire du circuit de commande 8, le pilotage du courant Im alimentant le moteur 1 de sorte à limiter les modulations de celui-ci.

Dans un exemple particulier (figure 4a, 4b, 5a-5c), la logique de commutation est réalisée de sorte que le champ rotorique soit déphasé du champ statorique d'un angle compris entre 60° et 120° de sorte à optimiser le couple fourni par le moteur 1.

Dans le cas où le codeur 4 ne serait pas indexé parfaitement par rapport au rotor, c'est à dire que la position des impulsions ne correspond pas aux positions idéales de commutation représentées sur les figures 5a-5c, il est possible, en sortie de chaîne et sur un banc dédié, de mémoriser le décalage qui existe entre la position des impulsions TP1-TP6 et celles souhaitées pour les commutations.

A cet effet, les signaux A, B représentatifs de la position du rotor sont utilisés pour mesurer le déphasage entre le passage à zéro des forces contre électromotrices du moteur 1 et le passage des impulsions de référence TP1-TP6.

Cette valeur de déphasage peut être mémorisée dans une mémoire de type EEPROM ou flash du circuit de commande 8 de sorte, par recalage, à permettre la détection des impulsions TP1-TP6 aux positions de commutation souhaitées.

On décrit ci-dessous un procédé d'utilisation d'un dispositif de commande comprenant en outre des moyens d'initialisation, par exemple intégrés dans le dispositif de commande 8, de la position du rotor 2 permettant d'adapter les signaux de commutation au sens de rotation voulu pour le rotor 2.

Lors de la mise sous tension du dispositif, ce procédé comprend une procédure d'initialisation de la position du rotor 2 qui comprend les étapes prévoyant d'abord de sélectionner une logique de commutation faisant tourner le champ statorique dans un sens.

Puis, on pilote le circuit de commande 8 selon le premier état de cette logique afin d'actionner deux interrupteurs T1-T6 pendant un laps de temps donné pour alimenter deux phases du moteur avec un courant linit suffisant pour mettre en rotation le rotor 2.

Le laps de temps peut être typiquement de 30 ms et le courant linit doit être choisi, par exemple par simulation, pour, en fonction de l'application considérée, permettre la rotation du rotor 2. Le laps de temps peut être optimisé selon l'inertie du système.

Ainsi, trois cas de figures peuvent se produire, soit le rotor 2 ne tourne pas, soit le rotor 2 tourne dans le même sens que le champ statorique, soit le rotor 2 tourne en sens inverse du champ statorique.

La détermination du cas de figure est effectuée par analyse dans le circuit de commande 8 des signaux A, B.

Les deux premiers cas ne permettent pas d'initialiser la position du rotor 2 car soit le courant d'initialisation linit n'a pas d'effet (champs statorique et rotorique en opposition de phase) soit les champs rotorique et statorique ne se croiseront pas lors du défilement des états de la logique de commutation.

Ainsi, si le rotor 2 ne tourne pas, on passe au deuxième état de la logique de commutation jusqu'à détection d'une rotation du rotor 2.

Et, si le rotor 2 tourne dans le même sens que le champ statorique, on change la logique de commutation, c'est à dire qu'on fait tourner le champ statorique dans l'autre sens.

Lorsque le rotor 2 tourne en sens inverse du champ statorique, on fait défiler les états de la logique de commutation jusqu'à détection d'une inversion du sens de rotation du rotor 2.

Lors de cette inversion du sens de rotation du rotor 2, on passe à l'état n-2 de la logique de commutation pour détecter une nouvelle inversion du sens de rotation du rotor 2.

Dans l'exemple représenté sur les figures, le champ rotorique est initialement en position P1 (voir figure 5b) et la logique de commutation induit une rotation anti horaire du champ statorique. Le premier état de cette logique de commutation place le champ statorique en (a) ce qui provoque la rotation du rotor 2 dans le sens horaire sous l'action du couple induit par l'angle formé entre les champs rotorique et statorique.

Puis, le deuxième état de la logique de commutation (position b) induit une rotation du rotor 2 dans le même sens jusqu'à la position P2 (voir figure 5c).

Le troisième état de la logique de commutation induit le champ statorique (c) qui est en avance de phase par rapport à la position P2 ce qui conduit à une inversion du sens de rotation du rotor 2.

Ensuite, l'état n-2, c'est à dire la position (a), est appliqué pour le champ statorique de sorte à refaire tourner le rotor 2 dans le sens horaire et l'impulsion TP3 est détectée.

De ces étapes, on déduit la position relative P3 du rotor 2 par rapport à l'impulsion TP3, cette détermination pouvant être fiabilisée en réitérant les premier (a) et troisième (c) états de la logique de commutation de sorte à faire osciller le rotor 2 autour de la position (b).

L'initialisation de la position du rotor 2 permet, lors du fonctionnement du dispositif de commande, de sélectionner la logique de commutation en fonction du sens de rotation voulu pour le rotor 2, ledit sens S étant injecté dans le circuit de commande 8.

En effet, dans l'exemple représenté sur la figure 5c, l'information de la position du rotor 2 peut être mémorisée dans le circuit de commande 8 en sachant que, compte tenu de la position P3 du rotor par rapport à TP3 :
- pour une rotation anti horaire, on alimente le stator 3 de sorte à obtenir le champ statorique d puis le déroulement e, f, a, b, c, etc... est effectué à chaque détection d'une nouvelle impulsion TP1-TP6 ;
- pour une rotation horaire, on alimente le stator 3 de sorte à obtenir le champ statorique (a), la détection de TP3 induit le passage de (a) à (f) puis le déroulement e, d, c, b, a, etc...est effectué à chaque détection d'une nouvelle impulsion TP1-TP6.

Ainsi, cette procédure permet de sélectionner la logique de commutation en fonction du sens de rotation voulu pour le rotor 2 tout en gardant un déphasage optimum entre les champs statorique et rotorique.

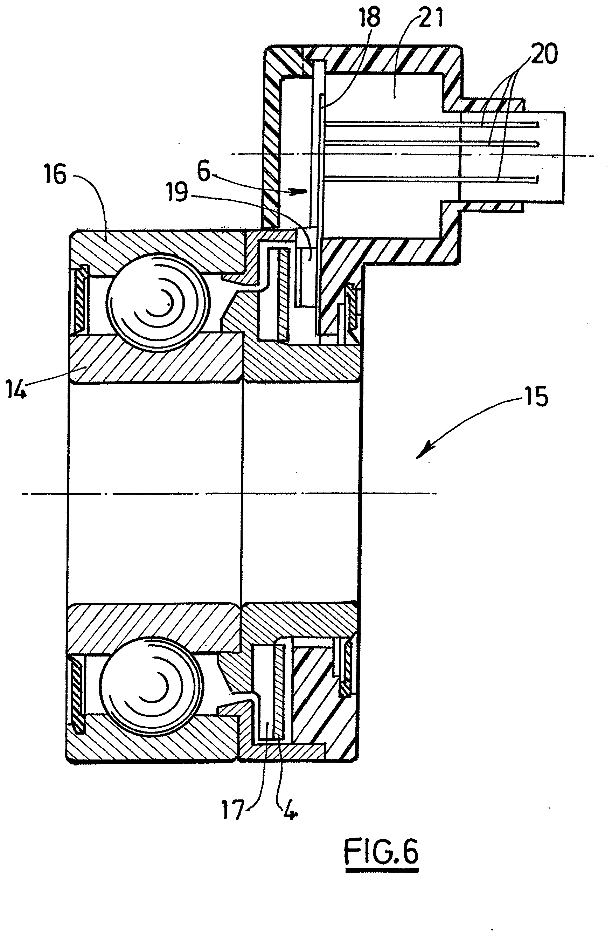

Selon une réalisation représentée sur la figure 6, le codeur 4 est associé à la bague tournante 14 d'un roulement 15 et le capteur 6 est associé à la bague fixe 16 dudit roulement.

Ainsi, l'invention propose un roulement 15 intégrant le codeur 4 et le capteur 6 du dispositif de commande, ledit roulement pouvant assurer la rotation du rotor 2 ou celle d'un organe mis en rotation par le rotor 2.

Le codeur 4 peut être associé à la bague tournante 14 par l'intermédiaire d'une armature annulaire 17 sur laquelle le codeur 4 est surmoulé.

La figure 6 représente un mode de réalisation de l'association du capteur 6 sur la bague extérieure fixe 16 du roulement 15. Le capteur 6 est associé à un support 18, par exemple de type PCB, portant d'une part l'ASIC 19 et d'autre part la connectique d'entrée/sortie 20 du capteur 6. L'ASIC 19 est positionné de sorte que les éléments sensibles soient en regard et à distance d'entrefer des pistes du codeur 4. Par ailleurs, la connectique d'entrée/sortie 20 est positionnée dans un logement 21 s'étendant radialement au roulement 15.

D'autres réalisations de l'association d'un codeur 4 et d'un capteur 6 sur un roulement 15 peuvent être envisagées, notamment celles décrites dans les documents FR-2 794 504 et FR-2 700 588 issus de la demanderesse.

En variante, on peut prévoir que le capteur 6 soit dissocié de la bague fixe 16 du roulement 15 tout en assurant le positionnement des éléments sensibles en regard et à distance d'entrefer des pistes du codeur 4.

## Revendications

1. Dispositif de commande d'un moteur à commutation électronique (1) pourvu de P phases et N paires de pôles, comprenant un capteur fixe disposé en regard et à distance d'entrefer d'un codeur, ledit codeur (4) étant destiné à effectuer une pluralité de tours autour de son axe de rotation, ledit codeur (4) comprenant une piste principale (4a) et une piste de commutation (4b), ledit capteur fixe (6) comportant au moins trois éléments sensibles dont au moins deux sont positionnés en regard de la piste principale (4a) de sorte à délivrer deux signaux électriques S1, S2 périodiques en quadrature et au moins un est positionné en regard de la piste de commutation (4b) de sorte à délivrer un signal électrique S3,
le capteur (6) comprenant un circuit électronique apte, à partir des signaux S1, S2 et S3, à délivrer :
- des signaux digitaux A, B carrés en quadrature, à partir desquels est définie, en fonction d'une première consigne de courant (I*), une deuxième consigne de courant (Iref) qui pilote le courant (Im) alimentant les enroulements de phase du moteur (1) ;
- un signal C sous forme de 2*P*N impulsions (TP1-TP6) par tour du codeur, à partir duquel des signaux de commutation sont fournis de sorte à commander des interrupteurs (T1-T6) ;
**caractérisé en ce que** le codeur (4) est un codeur circulaire, les pistes principales (4a) et de commutation (4b) étant concentriques sur le codeur (4), le codeur (4) étant formé d'un anneau magnétique multipolaire sur lequel est aimantée une pluralité de paires de pôles (5) Nord et Sud équirépartis avec une largeur angulaire constante de sorte à former les pistes principale (4a) et de commutation (4b), la piste de commutation (4b) comprenant 2*P*N singularités magnétiques (4b1-4b6) équiréparties angulairement, chaque singularité magnétique (4b1-4b6) étant formée de deux paires de pôles (5) qui sont différentes des autres.

2. Dispositif de commande selon la revendication 1, **caractérisé en ce qu'**il comprend un circuit de commutation (7) des courants dans les enroulements de phase du moteur (1) comportant 2*P*N interrupteurs (T1-T6), ainsi qu'un circuit de commande (8) du circuit de commutation (7) qui :
▪ à partir du signal C fournit des signaux de commutation des interrupteurs (T1-T6) et
▪ à partir des signaux A, B et en fonction d'une première consigne de courant (I*) définit une deuxième consigne de courant (Iref) qui pilote le courant (Im) alimentant les enroulements de phase du moteur (1).

3. Dispositif de commande selon la revendication 2, **caractérisé en ce que** le circuit de commande (8) comprend un microprocesseur 12 intégrant au moins une logique de commutation du circuit de commutation 7 qui détermine la succession des ouvertures/fermetures des différents interrupteurs T1-T6, ledit microprocesseur étant apte à mettre en oeuvre une boucle de régulation commandée par la deuxième consigne de courant (Iref) issue d'un circuit électronique (9), ledit circuit de commande (8) étant apte à moduler en largeur et en durée les signaux de commutation par l'intermédiaire d'une fonction logique ET (13).

4. Dispositif de commande selon l'une quelconque des revendications précédentes, **caractérisé en ce que** les éléments sensibles sont choisis parmi le groupe comprenant les sondes à effet Hall, les magnétorésistances, les magnétorésistances géantes.

5. Dispositif de commande selon la revendication 4, **caractérisé en ce que** les au moins deux éléments sensibles disposés en regard et à distance d'entrefer de la piste principale (4a) sont alignés.

6. Dispositif de commande selon l'une quelconque des revendications 1 à 5, **caractérisé en ce que** le capteur (6) comprend un interpolateur augmentant la résolution des signaux de sortie.

7. Dispositif de commande selon l'une quelconque des revendications 1 à 6, **caractérisé en ce que** le capteur (6) est intégré dans un circuit de type ASIC (19).

8. Dispositif de commande selon l'une quelconque des revendications 1 à 7, **caractérisé en ce que** le codeur (4) est associé à la bague tournante (14) d'un roulement (15) permettant la rotation du rotor (2) ou celle d'un organe mis en rotation par le rotor (2).

9. Dispositif de commande selon la revendication 8, **caractérisé en ce que** le capteur (6) est associé à la bague fixe (16) du roulement (15).

10. Dispositif de commande selon la revendication 8, **caractérisé en ce que** le capteur (6) est dissocié de la bague fixe (16) du roulement (15).

11. Procédé d'utilisation d'un dispositif de commande selon l'une quelconque des revendications 1 à 10, dans lequel les signaux de commande permettent, en fonction d'une logique de commutation prédéterminée, d'actionner les interrupteurs (T1-T6) deux à deux alternativement, le passage de l'actionnement de deux interrupteurs (T1-T6) aux deux suivants s'effectuant à chaque détection d'une impulsion électrique (TP1-TP6) du signal C.

12. Procédé selon la revendication 11, **caractérisé en ce qu'**il comprend une étape préalable d'indexation du codeur (4) dans laquelle le déphasage est mémorisé dans une mémoire de type EEPROM ou flash du circuit de commande (8).

13. Procédé selon la revendication 11 ou 12, **caractérisé en ce que**, lors de la mise sous tension du dispositif, une procédure d'initialisation de la position du rotor (2) du moteur est effectuée, ladite procédure comprenant les étapes prévoyant de :
a) sélectionner une logique de commutation faisant tourner le champ statorique dans un sens ;
b) piloter le circuit de commande (8) selon un premier état de cette logique afin d'actionner deux interrupteurs (T1-T6) pendant un laps de temps donné pour alimenter deux phases du moteur (1) avec un courant (linit) suffisant pour mettre en rotation le rotor (2) ;
c) détecter, par analyse des signaux A, B, le sens de rotation du rotor (2) sous l'action de ce courant (linit) ;
d) si le rotor (2) ne tourne pas, passer au deuxième état de la logique de commutation puis réitérer les étapes précédentes ;
e) si le rotor (2) tourne dans le même sens que le champ statorique, changer la logique de commutation puis réitérer les étapes précédentes ;
f) lorsque le rotor (2) tourne en sens inverse du champ statorique, réitérer les étapes b) et c) avec les états successifs de la logique de commutation jusqu'à inversion du sens de rotation du rotor (2) ;
g) lors de l'inversion du sens de rotation du rotor (2), passer à l'état n-2 de la logique de commutation pour détecter une nouvelle inversion du sens de rotation du rotor (2) ;
h) détecter la position de l'impulsion (TP1-TP6) du signal C enregistré lors de l'étape
g) de sorte à obtenir la position relative du rotor (2) par rapport à cette impulsion ;
ledit procédé permettant, en fonction du sens de rotation voulu pour le rotor (2), de sélectionner la logique de commutation correspondante.

14. Roulement (15) destiné à assurer la rotation du rotor (2) d'un moteur à commutation électronique (1) comprenant P phases et N paires de pôles (5) ou celle d'un organe mis en rotation par ledit rotor (2), ledit roulement (15) comprenant une bague fixe (16), une bague tournante (14) et des corps roulants disposés entre lesdites bagues (16, 14), dans lequel :
- est associé à la bague tournante (14) un codeur circulaire (4); et
- est associé à la bague fixe (16) un capteur (6) fixe disposé en regard et à distance d'entrefer du codeur (4),
**caractérisé en ce que** le codeur circulaire (4) et le capteur (6) sont respectivement le codeur circulaire et le capteur d'un dispositif de commande selon l'une quelconque des revendications 1 à 10.

## Patentansprüche

1. Regelvorrichtung eines elektronisch geschalteten Motors (1), ausgestattet mit P Phasen und N Paaren von Polen, umfassend einen festen Sensor, der in Spaltabstand und gegenüber einem Codierer angeordnet ist, wobei der Codierer (4) bestimmt ist, eine Vielzahl von Umdrehungen um seine Rotationsachse durchzuführen, wobei der Codierer (4) eine Hauptbahn (4a) und eine Schaltbahn (4b) umfasst, wobei der feste Sensor (6) mindestens drei sensible Elemente aufweist, von denen mindestens zwei gegenüber der Hauptbahn (4a) derart positioniert sind, dass zwei periodische elektrische Quadratursignale S1, S2 ausgegeben werden, und mindestens eins gegenüber der Schaltbahn (4b) derart positioniert ist, dass ein elektrisches Signal S3 ausgegeben wird,
wobei der Sensor (6) eine elektronische Schaltung umfasst, die in der Lage ist, ausgehend von den Signalen S1, S2 und S3, auszugeben:
- digitale Quadratur-Rechtecksignale A, B, ausgehend von denen in Abhängigkeit eines ersten Stromsollwerts (l*) ein zweiter Stromsollwert (lref) festgelegt wird, der den Strom (lm) steuert, der die Phasenwicklungen des Motors (1) versorgt;
- ein Signal C in Form von 2*P*N Impulsen (TP1-TP6) je Umdrehung des Codierers, ausgehend von dem Schaltsignale derart bereitgestellt werden, dass Schalter (T1-T6) gesteuert werden;
**dadurch gekennzeichnet, dass** der Codierer (4) ein kreisförmiger Codierer ist, wobei die Hauptbahnen (4a) und Schaltbahnen (4b) auf dem Codierer (4) konzentrisch sind, wobei der Codierer (4) von einen multipolaren Magnetring gebildet ist, auf dem eine Vielzahl von Paaren von Polen (5) Nord und Süd magnetisiert ist, die mit einer konstanten Winkelbreite derart gleichmäßig verteilt sind , dass die Hauptbahn (4a) und die Schaltbahn (4b) gebildet werden, wobei die Schaltbahn (4b) 2*P*N winklig gleichmäßig verteilte magnetische Singularitäten (4b1-4b6) umfasst, wobei jede magnetische Singularität (4b1-4b6) von zwei Paaren von Polen (5) gebildet ist, die sich von den anderen unterscheiden.

2. Regelvorrichtung nach Anspruch 1, **dadurch gekennzeichnet, dass** sie einen Schaltkreis (7) der Ströme in den Phasenwicklungen des Motors (1) umfasst, aufweisend 2*P*N Schalter (T1-T6), sowie einen Regelkreis (8) des Schaltkreises (7), der:
- ausgehend vom Signal C Schaltsignale der Schalter (T1-T6) bereitstellt, und
- ausgehend von den Signalen A, B und in Abhängigkeit von einem ersten Stromsollwert (l*) einen zweiten Stromsollwert (lref) festlegt, der den Strom (Im) steuert, der die Phasenwicklungen des Motors (1) versorgt.

3. Regelvorrichtung nach Anspruch 2, **dadurch gekennzeichnet, dass** der Regelkreis (8) einen Mikroprozessor (12) umfasst, der mindestens eine Schaltlogik des Schaltkreises (7) integriert, die die Abfolge des Öffnens/Schließens der verschiedenen Schalter T1-T6 bestimmt, wobei der Mikroprozessor in der Lage ist, eine von dem zweiten Stromsollwert (lref), der aus einem elektronischen Schaltkreis (9) hervorgegangen ist, geregelte Regelschleife umzusetzen, wobei der Regelkreis (8) in der Lage ist, die Schaltsignale über eine logische Funktion UND (13) in Breite und in Dauer zu modulieren.

4. Regelvorrichtung nach einem der vorangehenden Ansprüche, **dadurch gekennzeichnet, dass** die sensiblen Elemente aus der Gruppe ausgewählt sind, die die Sonden mit Hall-Effekt, die Magnetwiderstände, die Riesen-Magnetwiderstände umfasst.

5. Regelvorrichtung nach Anspruch 4, **dadurch gekennzeichnet, dass** die mindestens zwei sensiblen Elemente, die gegenüber und in Spaltabstand von der Hauptbahn (4a) angeordnet sind, fluchten.

6. Regelvorrichtung nach einem der Ansprüche 1 bis 5, **dadurch gekennzeichnet, dass** der Sensor (6) einen Interpolator umfasst, der die Auflösung der Ausgangssignale erhöht.

7. Regelvorrichtung nach einem der Ansprüche 1 bis 6, **dadurch gekennzeichnet, dass** der Sensor (6) in eine Schaltung vom Typ ASIC (19) integriert ist.

8. Regelvorrichtung nach einem der Ansprüche 1 bis 7, **dadurch gekennzeichnet, dass** der Codierer (4) dem drehenden Ring (14) eines Lagers (15) zugeordnet ist, das die Rotation des Rotors (2) oder die eines von dem Rotor (2) in Rotation versetzten Organs erlaubt.

9. Regelvorrichtung nach Anspruch 8, **dadurch gekennzeichnet, dass** der Sensor (6) dem festen Ring (16) des Lagers (15) zugeordnet ist.

10. Regelvorrichtung nach Anspruch 8, **dadurch gekennzeichnet, dass** der Sensor (6) vom festen Ring (16) des Lagers (15) getrennt ist.

11. Verfahren für die Verwendung einer Regelvorrichtung nach einem der Ansprüche 1 bis 10, wobei die Steuersignale erlauben, in Abhängigkeit von einer vorbestimmten Schaltlogik, die Schalter (T1-T6) abwechselnd paarweise zu betätigen, wobei der Übergang der Betätigung von zwei Schaltern (T1-T6) zu zwei folgenden bei jeder Detektion eines elektrischen Impulses (TP1-TP6) des Signals C erfolgt.

12. Verfahren nach Anspruch 11, **dadurch gekennzeichnet, dass** es einen vorherigen Indexierungsschritt des Codierers (4) umfasst, bei dem die Phasenverschiebung in einem Speicher von Typ EEPROM oder Flash des Regelkreises (8) gespeichert wird.

13. Verfahren nach Anspruch 11 oder 12, **dadurch gekennzeichnet, dass** beim Unterspannungsetzen der Vorrichtung ein Initialisierungsprozess der Position des Rotors (2) des Motors durchgeführt wird, wobei der Prozess die Schritte umfasst, die vorsehen:
a) Auswählen einer Schaltlogik, die bewirkt, dass das Statorfeld in eine Richtung dreht;
b) Steuern des Regelkreises (8) gemäß einem ersten Zustand dieser Logik, um zwei Schalter (T1-T6) in einem bestimmten Zeitraum zu betätigen, um zwei Phasen des Motors (1) mit einem Strom (linit) zu versorgen, der ausreichend ist, um den Rotor (2) in Rotation zu versetzen;
c) Feststellen, durch Analyse der Signale A, B, der Rotationsrichtung des Rotors (2) unter der Wirkung dieses Stroms (linit);
d) wenn der Rotor (2) nicht dreht, Wechseln in den zweiten Zustand der Schaltlogik, dann Wiederholen der vorangehenden Schritte;
e) wenn der Rotor (2) in der gleichen Richtung wie das Statorfeld dreht, Austauschen der Schaltlogik, dann Wiederholen der vorgehenden Schritte;
f) wenn der Rotor (2) in umgekehrter Richtung des Statorfelds dreht, Wiederholen der Schritte b) und c) mit den aufeinanderfolgenden Zuständen der Schaltlogik bis zur Umkehr der Rotationsrichtung des Rotors (2);
g) bei der Umkehr der Rotationsrichtung des Rotors (2), Wechseln in den Zustand n-2 der Schaltlogik, um eine neue Umkehr der Rotationsrichtung des Rotors (2) festzustellen;
h) Feststellen der Position des Impulses (TP1-TP6) des Signals C, das bei Schritt g) gespeichert wurde, um die relative Position des Rotors (2) in Bezug zu diesem Impuls zu erhalten;
wobei das Verfahren erlaubt, in Abhängigkeit von der für den Rotor (2) gewollten Rotationsrichtung, die entsprechende Schaltlogik auszuwählen.

14. Lager (15), das bestimmt ist, die Rotation des Rotors (2) eines elektronisch geschalteten Motors (1), umfassend P Phasen und N Paare von Polen (5), oder die eines Organs, das von dem Rotor (2) in Rotation versetzt wird, zu sichern, wobei das Lager (15) einen festen Ring (16), einen drehenden Ring (14) und Rollkörper umfasst, die zwischen den Ringen (16, 14) angeordnet sind, wobei:
- dem drehenden Ring (14) ein kreisrunder Codierer (4) zugeordnet ist; und
- dem festen Ring (16) ein fester Sensor (6) zugeordnet ist, der gegenüber und in Spaltabstand von dem Codierer (4) angeordnet ist,
**dadurch gekennzeichnet, dass** der kreisrunde Codierer (4) und der Sensor (6) jeweils der kreisrunde Codierer und der Sensor einer Regelvorrichtung nach einem der Ansprüche 1 bis 10 sind.

## Claims

1. Device for controlling an engine with electronic commutation (1) having P phases and N pairs of poles, comprising a fixed sensor arranged opposite and at an airgap distance from an encoder, said encoder (4) being intended to make a plurality of turns around the rotating axis thereof, said encoder (4) comprising a main track (4a) and a commutation track (4b), said fixed sensor (6) comprising at least three sensitive elements, of which at least two are positioned opposite the main track (4a) so as to deliver two periodic, out of phase electric signals S1, S2, and at least one is positioned opposite the commutation track (4b) so as to deliver an electric signal S3, the sensor (6) comprising an electronic circuit, capable, from the signals S1, S2 and S3, of delivering:
- digital, out of phase signals A, B, from which is defined, according to a first current set point (l*), a second current set point (lref) which controls the current (lm) supplying the phase windings of the engine (1) ;
- a signal C in the form of 2*P*N impulses (TP1-TP6) per encoder turn, from which the commutation signals are supplied so as to control the switches (T1-T6); **characterised in that** the encoder (4) is a circular encoder, the main track (4a) and commutation track (4b) being concentric on the encoder (4), the encoder (4) being formed of a multipolar magnetic ring, whereon is supplied a plurality of pairs of North and South poles (5), evenly distributed with a constant angular width so as to form the main track (4a) and commutation track (4b), the commutation track (4b) comprising 2*P*N magnetic singularities (4b1-4b6) angularly evenly distributed, each magnetic singularity (4b1-4b6) being formed of two pairs of poles (5) which are different from one another.

2. Control device according to claim 1, **characterised in that** it comprises a commutation circuit (7) of currents in the phase windings of the engine (1) comprising 2*P*N switches (T1-T6), as well as a circuit for controlling (8) the commutation circuit (7) which:
* from the signal C, supplies the commutation signals of the switches (T1-T6) and
* from the signals A, B and according to a first current set point (l*), defines a second current set point (lref) which controls the current (lm) supplying the phase windings of the engine (1).

3. Control device according to claim 2, **characterised in that** the control circuit (8) comprises a microprocessor 12 integrating at least one commutation logic of the commutation circuit 7 which determines the succession of openings/closures of the different switches T1-T6, said microprocessor being capable of implementing a regulation loop controlled by the second current set point (lref) coming from an electronic circuit (9), said control circuit (8) being capable of modulating the commutation signals in width and in duration, by the intermediary of an ET logic function (13).

4. Control device according to any one of the preceding claims, **characterised in that** the sensitive elements are chosen from amongst the group comprising Hall effect probes, magnetoresistances, giant magnetoresistances.

5. Control device according to claim 4, **characterised in that** the at least two sensitive elements arranged opposite and at an airgap distance from the main track (4a) are aligned.

6. Control device according to any one of claims 1 to 5, **characterised in that** the sensor (6) comprises an interpolator increasing the resolution of the output signals.

7. Control device according to any one of claims 1 to 6, **characterised in that** the sensor (6) is integrated in an ASIC type circuit (19).

8. Control device according to any one of claims 1 to 7, **characterised in that** the encoder (4) is connected to the turning ring (14) of a winding (15) enabling the rotation of the rotor (2) or that of a body rotated by the rotor (2) .

9. Control device according to claim 8, **characterised in that** the sensor (6) is connected to the fixed ring (16) of the winding (15).

10. Control device according to claim 8, **characterised in that** the sensor (6) is separate from the fixed ring (16) of the winding (15).

11. Method for using a control device according to any one of claims 1 to 10, wherein the control signals enable, according to a predetermined commutation logic, to actuate the switches (T1-T6) two-by-two alternatively, the passage from actuating two switches (T1-T6) to two next switches being made upon each detection of an electric impulse (TP1-TP6) of the signal C.

12. Method according to claim 11, **characterised in that** it comprises a prior step of indexing the encoder (4) wherein the dephasing is memorised in an EEPROM or flash type memory of the control circuit (8).

13. Method according to claim 11 or 12, **characterised in that**, during the powering up of the device, a procedure of initialising the position of the rotor (2) of the engine is carried out, said procedure comprising steps providing the following:
a) selecting a commutation logic making the stator field turn in one direction;
b) controlling the control circuit (8) according to a first state of this logic, in order to actuate two switches (T1-T6) for a given time lapse to supply two engine (1) phases with a current (linit) sufficient to rotate the rotor (2);
c) detecting, by analysing the signals A, B, the rotating direction of the rotor (2) under the action of this current (linit);
d) if the rotor (2) does not turn, going to the second state of the commutation logic, then repeating the preceding steps;
e) if the rotor (2) turns in the same direction as the stator field, changing the commutation logic then repeating the preceding steps;
f) when the rotor (2) turns in the opposite direction to the stator field, repeating steps b) and c) with successive states of the commutation logic until the rotating direction of the rotor (2) is reversed;
g) during the reversal of the rotating direction of the rotor (2), going to state n-2 of the commutation logic to detect a new reversal of the rotating direction of the rotor (2);
h) detecting the impulse position (TP1-TP6) of the signal C recorded during step g) so as to obtain the relative position of the rotor (2) in relation to this impulse; said method enabling, according to the desired rotating direction for the rotor (2), to select the corresponding commutation logic.

14. Winding (15) intended to ensure the rotation of the rotor (2) of an electronic commutation engine (1) comprising P phases and N pairs of poles (5) or that of a body rotated by said rotor (2), said winding (15) comprising a fixed ring (16), a turning ring (14) and rolling bodies arranged between said rings (16, 14), wherein:
- a circular encoder (4) is connected to the turning ring (14); and
- a fixed sensor (6) is connected to the fixed ring (16), arranged opposite and at an airgap distance from the encoder (4),
**characterised in that** the circular encoder (4) and the sensor (6) are respectively the circular encoder and the sensor of a control device according to any one of claims 1 to 10.
